# EUROPÄISCHE PATENTSCHRIFT

(11) **EP 3 768 610 B1**
(45) Veröffentlichungstag und Bekanntmachung des Hinweises auf die Patenterteilung: **12.04.2023**
(21) Anmeldenummer: 19701470.7
(22) Anmeldetag: 15.01.2019
(51) Int. Cl.: B65D 88/26, B65D 90/44, B65D 90/48

(54) **CONTAINER ZUM TRANSPORT VON FLIESSFÄHIGEM FÜLLGUT**
CONTAINER FOR TRANSPORTING FLOWABLE PRODUCTS
CONTENEUR POUR LE TRANSPORT DE PRODUITS FLUIDES

(30) Priorität: 22.03.2018 DE 102018106790
(43) Veröffentlichungstag der Anmeldung: 27.01.2021
(73) Patentinhaber: ZENTIS GmbH & Co. KG, 52070 Aachen (DE)
(72) Erfinder: KÖNIG, Phillip, 52080 Aachen (DE); FREIALDENHOVEN, Tim, 52249 Eschweiler (DE); WASSERKORDT, Ivo Frederik, 3620 Lanaken (BE); STELTER, Peter, 52074 Aachen (DE); JANSEN, Stephan, 52078 Aachen (DE)
(74) Vertreter: Kohlmann, Kai
(86) Internationale Anmeldenummer: PCT/EP2019/050930
(87) Internationale Veröffentlichungsnummer: WO 2019/179667

(56) Entgegenhaltungen:
- EP-A1- 2 695 830
- DE-T2- 60 316 694
- US-A- 3 999 668
- US-A1- 2003 028 336

## Beschreibung

Die vorliegende Anmeldung betrifft einen Container gemäß dem Oberbegriff von Anspruch 1 und 2.

Ein gattungsgemäßer Container kann insbesondere dazu verwendet werden, ein wässriges, fließfähiges Füllgut vorzuhalten. Hierzu sind beispielsweise sogenannte Fruchtzubereitungen zu nennen, die beispielsweise bei einem Hersteller abgefüllt und sodann an Abnehmer vertrieben werden. Der Container umfasst insbesondere ein Gestell sowie einen Behälter, wobei der Behälter mittels des Gestells in einem Abstand oberhalb eines Untergrundes lagerbar ist. Auf diese Weise ist der Behälter von seiner Unterseite her zugänglich. An besagter Unterseite verfügt der Behälter über mindestens eine Öffnung, mittels derer der Behälter mit Füllgut beladbar ist oder Füllgut aus dem Behälter entnehmbar ist. Um eine Kontamination des Füllguts insbesondere mit Sauerstoff zu vermeiden, verfügt der Behälter zudem über mindestens einen Gasanschluss, mittels dessen eine Schutzgasleitung an den Behälter anschließbar ist. Mittels einer solchen Schutzgasleitung ist es möglich, ein Schutzgas, beispielsweise Kohlendioxid, dem Behälter zuzuleiten. Auf diese Weise ist sichergestellt, dass neben dem Füllgut selbst ein Innenraum des Behälters ausschließlich mit dem Schutzgas gefüllt ist. Hierdurch wird erreicht, dass das in dem Behälter befindliche Füllgut nicht durch den Kontakt mit Umgebungsluft verdirbt.

Der Anschluss der Schutzgasleitung an den Gasanschluss des Behälters erfolgt in aller Regel bevor eine Entnahmevorrichtung an die Öffnung des Behälters angeschlossen wird. Dies hat zur Folge, dass in dem Moment der Entnahme von Füllgut aus dem Behälter in jedem Falle bereits die Schutzgasleitung angeschlossen ist und jederzeit Schutzgas in den Innenraum des Behälters nachströmen kann. Entsprechend ist es üblich, die Schutzgasleitung erst dann von dem Behälter zu entfernen, wenn die Entnahme von Füllgut beendet ist. Insbesondere ist es denkbar, immer zuerst die Entnahmevorrichtung von der Öffnung zu trennen, bevor die Schutzgasleitung von dem Gasanschluss entfernt wird.

Der Container ist vorzugsweise von Edelstahl gebildet, sodass er beliebig häufig verwendet, das heißt insbesondere be- und entladen, werden kann. Sofern das Füllgut eine vergleichsweise hohe Viskosität aufweist kann es sinnvoll sein, das Füllgut zur Entnahme aus dem Behälter mittels einer Pumpe abzupumpen. Um im Zuge der Entnahme des Füllguts aus dem Innenraum des Behälters eine ausreichende Nachströmung von Schutzgas sicherzustellen, ist es zudem vorteilhaft, wenn die Schutzgasleitung an eine Druckquelle angeschlossen ist, die das Schutzgas unter einen bestimmten Druck bereitstellt. Auf diese Weise ist sichergestellt, dass kein Fremdgas, insbesondere keine Umgebungsluft, unbeabsichtigter Weise in den Behälter einströmt.

### Stand der Technik

Container der eingangs beschriebenen Art sind im Stand der Technik bereits bekannt. Hierzu wird beispielhaft auf das Europäische Patent EP 1 544 030 B1 verwiesen, dass sich mit einem Gestell eines solchen Containers befasst.

In der alltäglichen Logistik betreffend derartige Container hat sich herausgestellt, dass es wünschenswert wäre, eine Vielzahl von Informationen betreffend individuelle Container jederzeit verfügbar und gegebenenfalls für einen Kunden abrufbar zu haben. Dies kann beispielsweise einen Ort des jeweiligen Containers betreffen, an dem dieser sich gegenwärtig befindet. Weiterhin ist es denkbar, andere Zustandsparameter des Containers als solchem als auch betreffend das in den Container gelagerte Füllgut zu erheben und abzufragen.

Die US 3 99 966 8 A offenbart einen Container zur Aufnahme von Heißmischasphalt, umfassend mindestens ein Gestell zur Aufstellung des Containers auf einem Untergrund. Der Container weist einen Behälter auf, innerhalb dessen der Heißmischasphalt aufbewahrbar ist, wobei der Behälter mittels des Gestells in einem Abstand von einem Untergrund lagerbar ist. Über eine an der Unterseite angeordnete Öffnung des Behälters ist der Asphalt aus den Innenraum des Behälters entnehmbar. Der Behälter weist an seiner Oberseite einen Rohrstutzen auf, an den eine Inertgasleitung angeschlossen ist. In der Inertgasleitung zwischen dem Rohrstutzen und den Gasflaschen für das Inertgas befinden sich verschiedene Ventile und ein Durchflusssensor. Der Durchflusssensor ist über die Inertgasleitung an den Rohrstutzen des Behälters anschließbar und wird von dem Inertgas durchströmt, das aus mehreren an der anderen Seite des Durchflusssensors angeschlossenen Gasflaschen strömt.

Die DE 603 16 694 T2 offenbart ein Lagerbehälter-Überwachungssystem und speziell ein Schutzgaspolster-Überwachungssystem. Das System umfasst eine Steuereinheit, einen Schutzgasdurchflußsensor und einen Lagerbehältersensor oder einen Schutzgassensor. Die Steuereinheit dient dazu, die Signale der Sensoren zu empfangen und in Abhängigkeit davon ein Schutzgasleckage-Anzeigesignal zu erzeugen. Die Steuereinheit ist an einem von dem Lagerbehälter entfernten Ort angeordnet und kommunikativ mit den Sensoren verbunden.

Die EP 2 695 830 A1 offenbart ein Verfahren zur Überwachung eines Lagertanks einschließlich der Berechnung des Flüssigkeitsstands innerhalb des Lagertanks. Echtzeitparameter, die mit dem Verdunstungsverlust einer im Lagertank gespeicherten Flüssigkeit verbunden sind, werden bestimmt, um Eingabedaten zu erzeugen. Die Echtzeitparameter umfassen mindestens eine Bedingung innerhalb des Lagertanks und mindestens eine Umgebungsbedingung. Umgebungssensoren an oder in der Nähe des Lagertanks können eine Windgeschwindigkeitssensor, einen Windrichtungssensor, einen Sonneneinstrahlungssensor oder einen Lufttemperatursensor umfassen. Die Sensoren können gruppiert und einer gemeinsamen drahtlosen Kommunikationsvorrichtung zugeordnet werden. Eine Rechner ist kommunikativ verbunden, um Eingabedaten von den Sensoren zu empfangen.

Die US 2003/028336 A1 offenbart ein System zum Überwachen der Zustände innerhalb eines Lagertanks mit einem Sensor, der Zustandsdaten innerhalb des Lagertanks erfasst und an eine Basisstation mittels eines Funkmodems überträgt. Die Zustandsdaten werden dekodiert und grafisch dargestellt. Die grafische Anzeige enthält eine Darstellung der Bedingungen des Lagertanks, einschließlich der Konfiguration des Lagertanks, des aktuellen Flüssigkeitsstands und der Temperatur im Lagertank. Die Basisstation ist mit einem Kommunikationsnetzwerk verbunden, so dass die Zustandsdaten über ein drahtloses Kommunikationsnetzwerk an entfernte Benutzer übermittelt werden können.

### Aufgabe

Die vorliegende Anmeldung hat sich nunmehr zur Aufgabe gesetzt, einen Container bereitzustellen, bei dem überwachbar ist, ob eine Entnahme von Füllgut aus dem Behälter des Containers stattfindet, insbesondere sollen Beginn und Ende einer Entnahme von Füllgut aus dem Container erfassbar sein.

### Lösung

Die zugrunde liegende Aufgabe wird erfindungsgemäß mittels eines Containers mit den Merkmalen der unabhängigen Ansprüche 1 und 2 gelöst. Vorteilhafte Ausgestaltungen der Erfindung ergeben sich aus den Unteransprüchen 3 bis 17.

In der Lösung nach Anspruch 1 weist der Mediumkanal des Adapterelements erfindungsgemäß mindestens eine Engstelle auf, an der ein Querschnitt des Mediumkanals gegenüber einem Querschnitt des Mediumkanals außerhalb der Engstelle reduziert ist. Vorteilhafterweise ist die Engstelle derart in den Mediumkanal eingebunden, dass der Querschnitt des Mediumkanals beidseits der Engstelle aufgeweitet ist. Mit anderen Worten ist der Mediumkanal vorteilhafterweise derart ausgestaltet, dass durch den Mediumkanal strömendes Gas im Bereich der Engstelle beschleunigt wird und sodann nach Verlassen der Engstelle aufgrund der Aufweitung des Mediumkanals abgebremst wird. Im Zuge der Beschleunigung des Gases wird der dynamische Druck desselben innerhalb des Mediumkanals lokal erhöht und der statische Druck entsprechend reduziert, soweit der Gesamtdruck des Gases, das beispielsweise aus einer unter Druck stehenden Gasflasche bereitgestellt wird, konstant bleibt.

Die Sensoreinrichtung weist erfindungsgemäß mindestens eine Stichleitung auf, die strömungstechnisch mit den Mediumkanal des Adapterelements zusammenwirkt. Eine Längsachse der Stichleitung ist vorzugsweise senkrecht zu einer Längsachse des Mediumkanals orientiert, sodass die Stichleitung senkrecht auf den Mediumkanal trifft. Die Stichleitung trifft im Bereich einer vorstehend genannten Engstelle auf den Mediumkanal. Mittels einer solchen Stichleitung ist es erfindungsgemäß möglich, an deren dem Mediumkanal abgewandten Ende einen Drucksensor anzuordnen, mittels dessen Änderungen des Drucks innerhalb der Stichleitung erfassbar sind. Eine solche Ausgestaltung der Sensoreinrichtung ermöglicht die Messung einer Veränderung des statischen Drucks innerhalb des Mediumkanals, die sich aufgrund einer Strömungsgeschwindigkeit des durch den Mediumkanal strömenden Gases ergibt. Dem liegt die Überlegung zugrunde, dass eine umso größere Strömungsgeschwindigkeit des Gases im Bereich der Engstelle zu einem umso höheren dynamischen Druck und umgekehrt analog hierzu zu einem umso niedrigeren statischen Druck des Gases in dem Mediumkanal führt, soweit ein Gesamtdruck des Gases, der mittels einer Druckquelle zur Verfügung gestellt wird, konstant ist.

Infolge der Veränderung des statischen Drucks in dem Mediumkanal ändert sich auch der Druck in der Stichleitung, die aufgrund ihrer bevorzugt senkrechten Ausrichtung zum Mediumkanal ausschließlich mit dem statischen Druck des Gases beaufschlagt ist, wobei diese Veränderung mittels des Drucksensors ermittelbar ist. Auf diese Weise kann zunächst grundsätzlich festgestellt werden, das Schutzgas durch den Mediumkanal strömt und mithin offenbar eine Entnahme von Füllgut aus dem Behälter des Containers stattfindet. Anderenfalls würde das Schutzgas nicht in den Behälter einströmen, sondern sich womöglich lediglich der statische Druck erhöhen, je nach Druckniveau der Quelle des Schutzgases. Im Ergebnis ermöglicht demzufolge die erfindungsgemäße Kombination aus Engstelle, Stichleitung und Drucksensor eine Überwachung der Strömungsverhältnisse eines Schutzgases durch die Sensoreinrichtung.

In der alternativen Ausgestaltung des Adapterelements nach Anspruch 2 wird eine Veränderung des Drucks innerhalb des Mediumkanals nicht nach dem Venturi-Prinzip, wie bei der Ausgestaltung nach Anspruch 1 erfasst, sondern mittels eines sogenannten Pitotrohrs mit einem Öffnungsquerschnitts, der derart zur Strömungsrichtung des Schutzgases in dem Mediumkanal ausgerichtet ist, dass ein Teil des Schutzgas in das Pitotrohr eintritt, wobei das Pitotrohr den Öffnungsquerschnitt fluidleitend mit einem Drucksensor verbindet. Mittels einer solchen Anordnung ist der dynamische Druck des Schutzgases innerhalb des Mediumkanals bzw. eine Veränderung desselben erfassbar, sodass auch mit einer solchen Anordnung feststellbar ist, sobald eine Strömung von Schutzgas durch den Mediumkanal einsetzt. Das Auftreten einer solchen Strömung mit der Entnahme von Füllgut aus dem Behälter assoziierbar, sodass anhand erfasster Daten des Drucksensors Beginn und Ende einer Entnahme von Füllgut aus dem Container erfassbar sind.

Mittels Aufzeichnung und anschließender Auswertung eines Verlaufs von mittels des Drucksensors ermittelter Daten ist es möglich, schließlich eine Aussage darüber zu treffen, über welchen Zeitraum hinweg Schutzgas durch die Sensoreinrichtung hindurch in den Innenraum des Behälters eingeströmt ist. Hieraus ist der Rückschluss möglich, dass über denselben Zeitraum hinweg Füllgut aus dem Behälter entnommen wurde. In Kenntnis dieses Zeitraums kann eine Aussage über einen verbleibenden Füllstand des Behälters gemacht werden, nachdem der Zeitraum der Entnahme von Füllgut beendet ist. Wird beispielsweise mittels Auswertung eines Druckverlaufs des Schutzgases festgestellt, dass über einen Zeitraum von 10 Minuten hinweg Füllgut aus dem Behälter entnommen wurde, kann bei bekanntem Massestrom der Entnahme des Füllgutes aus dem Behälter, dessen verbleibender Füllstand in Bezug auf den Ausgangsfüllstand zu Beginn der Entnahme ermittelt werden. Eine Druckverlaufskurve, die mittels des Drucksensors erfasst und anschließend aufgezeichnet wurde, kann insbesondere in Momenten, in denen eine Pumpe zur Entnahme des Füllguts aktiviert und deaktiviert wird, charakteristische Ausschläge aufweisen, mittels deren Interpretation in der oben beschriebenen Weise eine Aussage über die Entnahmedauer und daraus resultierend der entnommene Menge des Füllguts möglich ist. Beispielsweise kann die Druckverlaufskurve im Moment der Aktivierung der Pumpe einen schlagartigen Abfall zeigen, was auf eine sich einstellende Strömung des Schutzgases innerhalb des Mediumkanals zurückzuführen ist. Diese setzt ein, da ein freiwerdendes Volumen im Innenraum des Behälters mit Schutzgas "nachgefüllt" wird, das durch den Gasanschluss des Behälters - und somit vorher durch den Mediumkanal der Sensoreinrichtung - in den Innenraum einströmt. Infolge der Strömung des Schutzgases durch den Mediumkanal fällt im Bereich der Engstelle aufgrund des Anstiegs des dynamischen Drucks der statische Druck ab, was mittels des in der an die Engstelle angeschlossenen Stichleitung vorhandenen Drucksensors als Druckabfall registriert wird. Umgekehrt steigt der statische Druck in der Stichleitung bei Beendigung der Entnahme von Füllgut aus dem Behälter wieder an, sodass der Zeitpunkt der Beendigung der Entnahme feststellbar ist.

Eine Überwachung des Füllstands eines Behälters ist grundsätzlich im Zuge der Entnahme des Füllguts von besonderem Interesse, da bei einer Befüllung in aller Regel ohnehin der Behälter vollständig gefüllt wird, sodass anschließend immer ein voller Behälter vorliegt. Bei der Entnahme ist es hingegen sehr üblich, dass das Füllgut etappenweise, womöglich über mehrere Tage verteilt, entnommen wird, sodass eine genaue Verfolgung der Abnahme des Füllstands des Behälters von Interesse ist. Eine Entnahme des Füllguts aus einem jeweiligen Behälter kann je nach Verwendung des Füllguts sehr individuell sein und folgt in der Praxis selten einem immer gleichen Muster.

Sofern der Massestrom der Entnahme von Füllgut nicht bekannt ist, kann über die Auswertung der Druckkurve zumindest zuverlässig die erstmalige Entnahme von Füllgut aus dem vollständig gefüllten Behälter und die vollständige Entleerung des Behälters festgestellt werden. Eine qualitative Füllstandskontrolle ist daher mit dem Drucksensor in jedem Fall möglich.

Erfindungsgemäß umfasst der Container mindestens eine Sensoreinrichtung, die ein n Telemetriemodul aufweist. Das Adapterelement hat die Funktion, die Sensoreinrichtung in Kraft übertragender Weise an dem Container anzuordnen bzw. anzubringen. Die Sensoreinrichtung ist mittels des Adapterelements in vorteilhafter Ausgestaltung der Erfindung zerstörungsfrei lösbar an den Gasanschluss des Behälters anschließbar. Besagter Gasanschluss ist in aller Regel dazu hergerichtet, mit einer Schutzgasleitung verbunden zu werden, mittels derer in der eingangs beschriebenen Weise dem Innenraum des Behälters ein Schutzgas zuleitbar ist. Damit auch nach Anordnung der Sensoreinrichtung an den Gasanschluss des Behälters weiterhin eine Schutzgasleitung an den Behälter angeschlossen werden kann und mittels der Schutzgasleitung Schutzgas in den Innenraum des Behälters leitbar ist, verfügt die Sensoreinrichtung an bzw. in ihrem Adapterelement über mindestens einen Gasstutzen sowie mindestens einen Mediumkanal. Der Gasstutzen ist dazu geeignet, die Schutzgasleitung aufzunehmen, sodass ausgehend von der Schutzgasleitung ein Schutzgas zunächst durch den Gasstutzen und sodann durch den Mediumkanal des Adapterelements hindurch in den Innenraum des Behälters leitbar ist. Mit anderen Worten nutzt die erfindungsgemäße Sensoreinrichtung den an jedem Container vorhandenen Gasanschluss, um in Kraft übertragender Weise mit dem Container lösbar verbunden zu werden. Mittels der Bereitstellung eines Gasstutzens sowie eines Mediumkanals verliert der Container daraufhin jedoch nicht die Möglichkeit, mit einer Schutzgasleitung verbunden zu werden. In gewisser Weise wird der Gasanschluss lediglich an die Sensoreinrichtung verlegt.

Weiterhin erfindungsgemäß verfügt die Sensoreinrichtung an ihrem Telemetriemodul über mindestens einen Sensor, wobei mindestens ein Sensor der Drucksensor ist, sowie mindestens einen Sender. Der Sensor ist dazu geeignet, Daten betreffend mindestens einen Zustandsparameter des Containers und/oder des darin vorgehaltenen Füllguts zu erfassen, wobei diese Daten entweder unmittelbar oder zeitverzögert mittels des Senders kabellos verwendbar sind. Die Daten betreffen mindestens einen Zustandsparameter und können insbesondere neben den Daten des Drucksensors eine absolute Position der Sensoreinrichtung bzw. des damit verbundenen Containers betreffen, wobei der Sensor in diesem Fall von einem Geopositionssensor gebildet ist. Alternativ oder zusätzlich ist es denkbar, dass das Telemetriemodul neben den Daten des Drucksensors mindestens einen Temperatursensor umfasst, mittels dessen eine Umgebungstemperatur des Containers und/oder eine Temperatur des in dem Behälter befindlichen Füllguts messbar ist. Alternativ oder zusätzlich ist es denkbar, dass das Telemetriemodul mindestens einen, vorzugsweise eine Mehrzahl von Beschleunigungssensoren aufweist, mittels derer ein Beschleunigungszustand des Containers neben den Daten des Drucksensors erfassbar ist. Auf diese Weise ist ein Zustand des Containers überwacht war, wobei beispielsweise ein Umfallen des Containers anhand entsprechend starker Ausschläge eines Beschleunigungsdiagramms mindestens eines Beschleunigungssensors erkennbar wäre.

Der erfindungsgemäße Container hat viele Vorteile. Insbesondere bietet er die Möglichkeit, je nach Sensorik mindestens einen Zustandsparameter, vorzugsweise eine Mehrzahl von Zustandsparametern, zu erfassen und mittels des Senders an eine entsprechende Empfangseinheit zu versenden. Der Sender kann beispielsweise über ein Mobilfunkmodul verfügen, mittels dessen Daten innerhalb eines jeweiligen Mobilfunknetzes versendbar sind. Auf diese Weise ist die Sensoreinrichtung dazu geeignet, dauerhaft und fortwährend einen Zustand des Containers zu überwachen und diesbezügliche Daten zur Verfügung zu stellen, sodass der Container im Wege einer Fernwartung und Überwachung geprüft werden kann. Beispielsweise kann es somit einem Kunden ermöglicht werden, gewissermaßen "online" einen Aufenthaltsort eines jeweiligen Containers abzufragen und auf diese Weise beispielsweise eine prognostizierte Ankunftszeit des Containers in seinem Haus zu ermitteln. Ebenso ist es im Interesse einer Qualitätssicherung denkbar, permanent eine Temperatur des in dem Container befindlichen Füllguts zu überwachen und auf diese Weise sicherzustellen, dass eine Erwärmung oder Abkühlung des Füllguts über bzw. unter ein bestimmtes Temperaturniveau zu keinem Zeitpunkt stattgefunden hat. Weiterhin sind eventuelle Beschädigungen eines jeweiligen Containers feststellbar, wobei in einer vorteilhaften Verknüpfung verschiedener Datensätze beispielsweise auch feststellbar ist, an welchem Ort eine Beschädigung eines jeweiligen Containers stattgefunden hat. Auf diese Weise lassen sich gegebenenfalls Verantwortlichkeiten feststellen, indem mittels einer Positionsüberwachung kontrollierbar ist, in wessen Verantwortungsbereich sich ein jeweiliger Container im Moment seiner Beschädigung befunden hat.

Ein weiterer Vorteil des erfindungsgemäßen Containers besteht darin, dass die lösbare Sensoreinrichtung besonders einfach an den Container - und vor allem an bereits im Umlauf befindliche Container - angeschlossen werden kann. Hierzu ist es lediglich erforderlich, die Sensoreinrichtung an den ohnehin vorhandenen Gasanschluss des Behälters anzuschließen und auf diese Weise an dem Container zu fixieren. Da der Gasanschluss typischerweise bei jeder Befüllung und Entladung eines Containers genutzt werden muss, um den Innenraum des Behälters mit Schutzgas zu versorgen, ist zudem sichergestellt, dass der Gasanschluss in jedem Falle gut zugänglich ist. In aller Regel befindet sich der Gasanschluss an einer Oberseite des Containers, insbesondere an dessen Deckel. Der erfindungsgemäße Container kann demzufolge besonders einfach im Wege einer Nachrüstung hervorgebracht werden, indem bereits bestehende Container einzeln jeweils mit einer Sensoreinrichtung ausgestattet werden, die auf den bestehenden Gasanschluss des Behälters aufgesetzt werden. Aufgrund der Wiedergabe eines Gasstutzens und eines Mediumkanals ist es im Weiteren trotz der Verwendung der Sensoreinrichtung unverändert möglich, eine Schutzgasleitung an den Container anzuschließen, sodass der Container ohne jegliche Einschränkung weiterverwendet werden kann.

In einer besonders vorteilhaften Ausgestaltung des erfindungsgemäßen Containers ist der Gasanschluss des Behälters mit einem Gasstutzen ausgestattet, der ferner eine Schnellkupplung umfassen kann. Das Adapterelement der lösbaren Sensoreinrichtung ist dann derart ausgebildet, dass es formschlüssig auf diesen Gasstutzen des Behälters aufsetzbar ist, wobei der an dem Adapterelement ausgebildete Gasstutzen denjenigen des Behälters zumindest betreffend dessen Funktion kompatibel wiedergibt. Vorteilhafterweise sind der Gasstutzen des Adapterelements sowie der Gasstutzen des Behälters zumindest im Wesentlichen, vorzugsweise vollständig, identisch ausgebildet. Bei dieser Ausgestaltung ist es besonders einfach möglich, eine jeweilige Schutzgasleitung ohne jegliche Anpassung an den erfindungsgemäßen Container anzuschließen, da der Gasstutzen des Adapterelements der Sensoreinrichtung kompatibel zu dem eigentlichen Gasstutzen des Behälters ausgebildet ist. Da eine Anschlusskupplung der Schutzgasleitung auf den Gasstutzen des Behälters angepasst ist, passt besagte Anschlusskupplung fortan auch auf den zumindest kompatibel, vorzugsweise identisch, ausgebildeten Gasstutzen des Adapterelements. Eine funktionale Einschränkung oder Umstellung im Zusammenhang mit der Nutzung des erfindungsgemäßen Containers ist demzufolge nicht notwendig. Alternativ oder zusätzlich ist es denkbar, dass die Sensoreinrichtung mit dem Gasanschluss des Behälters verschraubt ist, insbesondere mittels einer Überwurfmutter. In einer alternativen Ausgestaltung der Erfindung kann die Sensoreinrichtung jedoch auch stoffschlüssig mit dem Gasanschluss des Behälters verbunden sein, beispielsweise durch eine Schweißverbindung.

Unabhängig von der Ausgestaltung des Adapterelements ist es weiterhin vorteilhaft, wenn das Telemetriemodul der Sensoreinrichtung über mindestens einen Geopositionssensor und/oder über mindestens einen Beschleunigungssensor und/oder über mindestens einen Temperatursensor verfügt. Mittels dieser Sensoren aufgenommene Daten können genutzt werden, um einen Zustand des jeweiligen Containers zu beurteilen. Vorteilhafterweise umfasst die Sensoreinrichtung weiterhin mindestens einen Datenlogger, mittels dessen erfasste Daten speicherbar sind. Ferner kann es von Vorteil sein, wenn die Sensoreinrichtung mindestens eine Auswerteinheit umfasst, mittels derer von einem oder mehreren Sensoren erfasste Daten verarbeitet werden können. Somit ist es beispielsweise denkbar, dass eine Auswerteinheit mittels Hinterlegung einer bestimmten Logik Daten verarbeitet, von dem Drucksensor erfasst wurden, woraufhin bereits in bzw. an der Sensoreinrichtung eine Interpretation der Daten vorgenommen werden kann. Mittels des Senders werden sodann nicht lediglich rohe Daten eines jeweiligen Sensors verwendet, sondern bereits verarbeitete Daten.

Die erfindungsgemäße Sensoreinrichtung weiter ausgestaltend umfasst diese mindestens eine Schnellkupplung, mittels derer die Sensoreinrichtung an den Gasanschluss des Containers werkzeuglos anschließbar ist. Eine solche Schnellkupplung ermöglicht es, die Sensoreinrichtung schlichtweg mittels Aufsteckens und Verrastens an den Container anzuschließen, wobei die Schnellkupplung an den Gasanschluss einrastet und auf diese Weise eine kraftübertragende Verbindung zwischen der Sensoreinrichtung und dem Container herstellt. Bei Verwendung einer solchen Schnellkupplung ist es umgekehrt ebenso einfach möglich, die Sensoreinrichtung wieder von dem Container zu entfernen, beispielsweise zu Wartungszwecken. Alternativ zur Verwendung einer Schnellkupplung ist es selbstverständlich ebenso denkbar, die Sensoreinrichtung in anderer Weise an dem Container zu fixieren, beispielsweise mittels einer Verschraubung.

Ein weiterer besonderer Vorteil des erfindungsgemäßen Verfahrens besteht darin, dass es ohne Weiteres auf jeden bestehenden Container anwendbar ist, da die Sensoreinrichtung an einen ohnehin vorhandenen Gasanschluss eines jeweiligen Containers angeschlossen wird. Auf diese Weise ist die Sensoreinrichtung an dem Container fixiert, wobei eine Demontage der Sensoreinrichtung vorzugsweise werkzeuglos möglich ist.

### Ausführungsbeispiele

Der erfindungsgemäße Container ist nachstehend anhand eines Ausführungsbeispiels, das in den Figuren dargestellt ist, näher erläutert. Es zeigt:
- Fig. 1:: Eine schematische Seitenansicht eines erfindungsgemäßen Containers,
- Fig. 2:: Eine perspektivische Ansicht eines Deckels des Containers gemäß Figur 1,
- Fig. 3:: Einen vertikalen Querschnitt durch eine Sensoreinrichtung des Containers gemäß Figur 1,
- Fig. 4:: Ein Detail der Sensoreinrichtung gemäß Figur 3,
- Fig. 5:: Ein Detail einer alternativen Sensoreinrichtung,
- Fig. 6:: Eine perspektivische Ansicht eines Deckels für einen Container gemäß Figur 1, jedoch mit einer alternativen Sensoreinrichtung,
- Fig. 7:: Einen vertikalen Querschnitt durch die Sensoreinrichtung gemäß Figur 6,
- Fig. 8:: Ein Detail der Sensoreinrichtung gemäß Figur 7 und
- Fig. 9:: Eine Druckverlaufskurve während einer Entnahme von Füllgut aus einem erfindungsgemäßen Container.

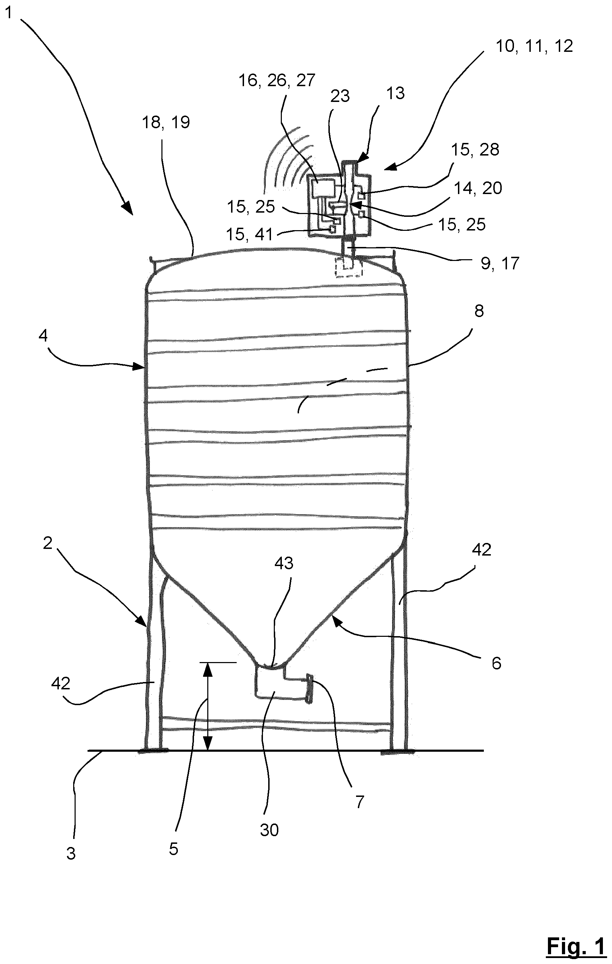

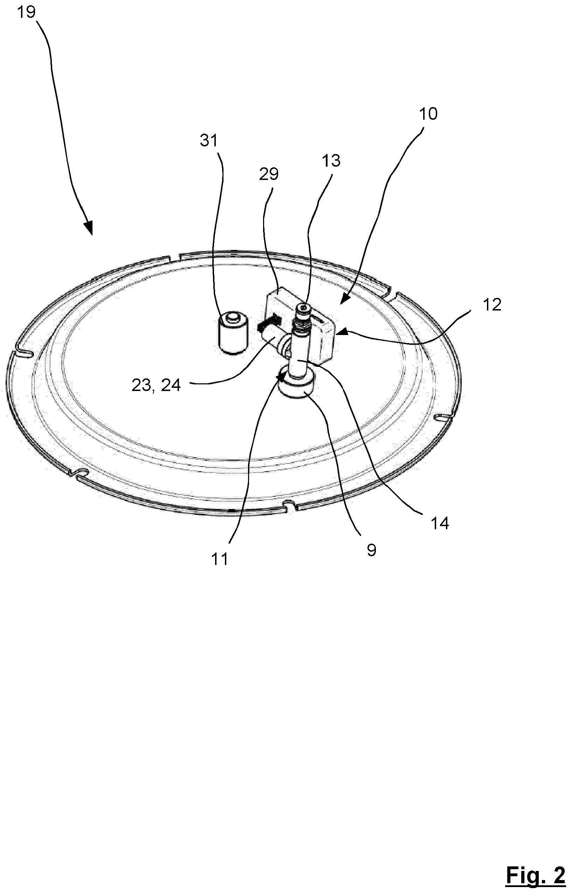

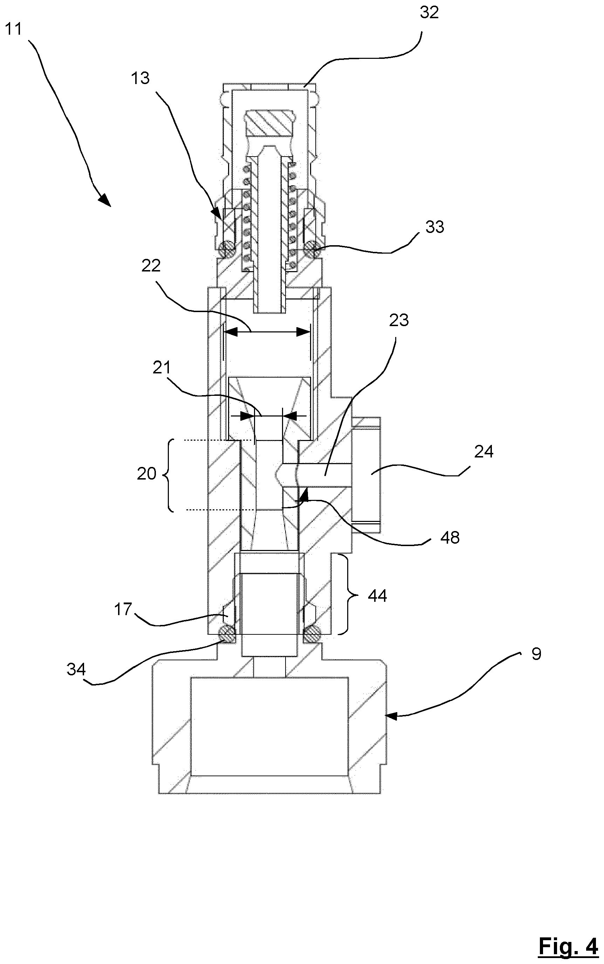

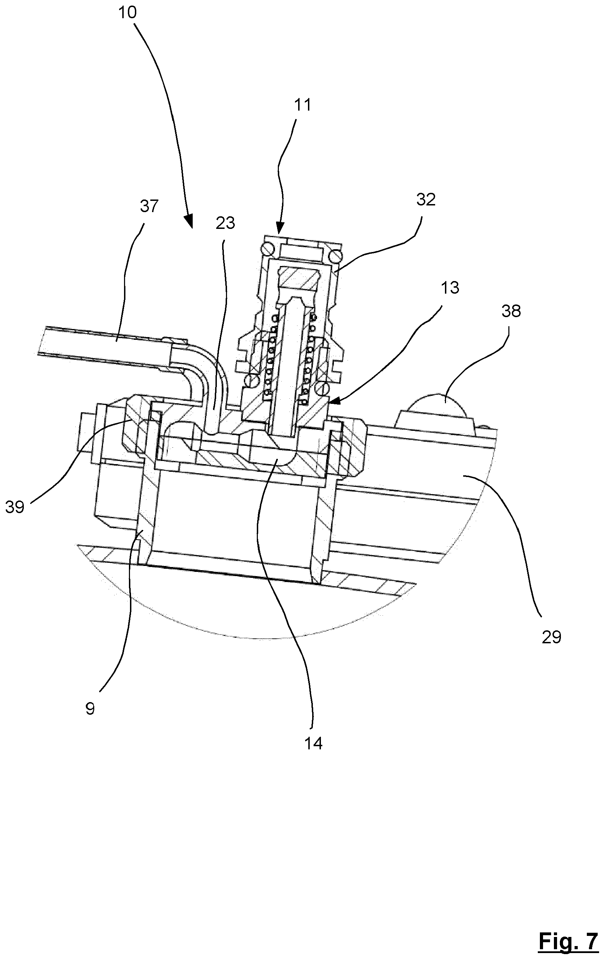

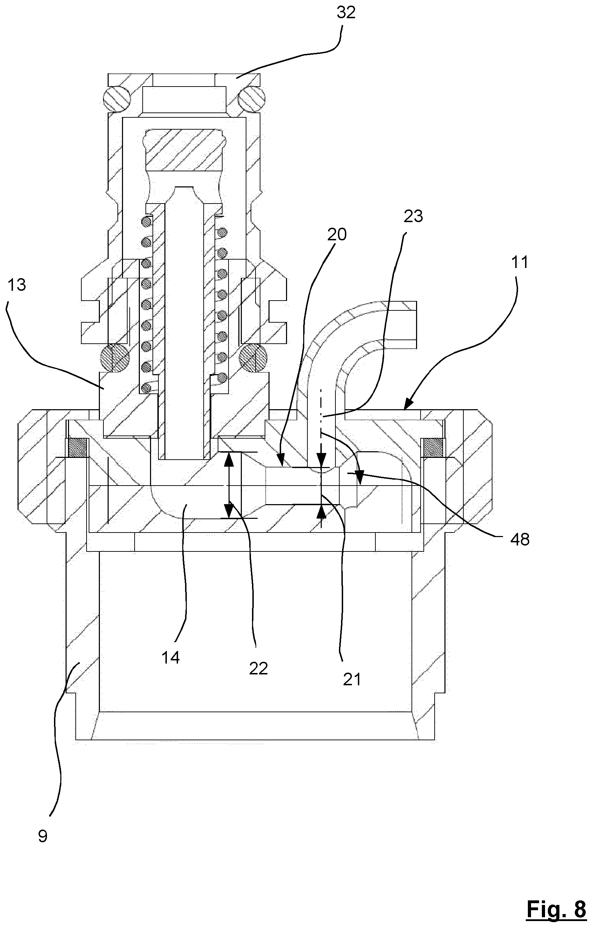

Ein Ausführungsbeispiel, das in den **Figuren 1 bis 9** gezeigt ist, umfasst einen erfindungsgemäßen Container **1**, der einen Behälter **4** sowie ein Gestell **2** umfasst. Das Gestell **2** umfasst wiederum eine Mehrzahl von Beinen **42**, mittels derer der Container **1** auf einem Untergrund **3** aufsteht. Der Behälter **4** ist mittels des Gestells **2** derart beabstandet von dem Untergrund **3** gelagert, dass eine Unterseite **6** des Behälters **4** von unten her zugänglich ist. Insbesondere befindet sich eine tiefste Stelle **43** des Behälters **4** in einem Abstand **5** von dem Untergrund **3**. Besagte tiefste Stelle **43** wirkt mit einer Öffnung **7** zusammen, durch die hindurch ein Innenraum **8** des Behälters **4** mit Füllgut beladbar ist bzw. besagtes Füllgut aus dem Innenraum **8** entnehmbar ist. Hierzu wirkt der Behälter **4** mit einem Anschlussrohr **30** zusammen, dass einen 90° Winkel aufweist, sodass ein Querschnitt der Öffnung **7** vertikal orientiert ist. Die Öffnung **7** wirkt hier mit einem Anschlussstutzen zusammen, sodass ein Füllgutschlauch an die Öffnung **7** ankoppelbar ist, mittels dessen Füllgut aus dem Behälter **4** entnehmbar ist oder umgekehrt Füllgut in den Behälter **4** einfüllbar ist.

An einer Oberseite **18** weist der erfindungsgemäße Container **1** einen Deckel **19** auf, an dem ein Gasanschluss **9** und ein Überdruckventil **31** ausgebildet sind. Dieser Gasanschluss **9** dient dazu, mit einer in den Figuren nicht dargestellten Schutzgasleitung zusammenzuwirken. Mittels einer solchen Schutzgasleitung wird die Möglichkeit geschaffen, dem Innenraum **8** des Behälters **4** ein Schutzgas zuzuleiten, beispielsweise Kohlendioxid. Ein solches Schutzgas ist bedeutsam, um ein in dem Behälter **4** verfügbares Freivolumen, das nicht mit einem jeweiligen Füllgut gefüllt ist, auszufüllen. Insbesondere ist es oftmals zu vermeiden, dass das Füllgut mit Sauerstoff in Kontakt kommt, woraufhin das Füllgut oxidieren würde. Das Schutzgas verhindert derartige Reaktionen und trägt mithin zu einer langen Haltbarkeit des Füllguts innerhalb des Behälters **4** bei. Die Schutzgasleitung ist typischerweise an eine Druckquelle angeschlossen, mittels derer das jeweilige Schutzgas unter einem Druck zur Verfügung gestellt wird. Auf diese Weise ist sichergestellt, dass im Zuge einer Entnahme des Füllguts aus dem Behälter **4** unmittelbar entsprechend Schutzgas in das freiwerdende Volumen in den Behälter **4** nachströmt.

In dem gezeigten Beispiel wirkt der Gasanschluss **9** mit einem Gasstutzen **17** zusammen, der hier dazu geeignet ist, mit einem Schnellverschluss **32** der Schutzgasleitung zusammenzuwirken. Auf diese Weise ist es besonders einfach möglich, die Schutzgasleitung werkzeuglos an den Gasanschluss **9** anzuschließen und eine strömungstechnische Verbindung mit dem Innenraum **8** des Behälters **4** herzustellen. Umgekehrt ist es ebenso einfach möglich, die Schutzgasleitung wieder von den Gasanschluss **9** zu entfernen.

Erfindungsgemäß umfasst der erfindungsgemäße Container **1** eine Sensoreinrichtung **10**, die ein Adapterelement **11** sowie ein Telemetriemodul **12** umfasst. Das Adapterelement **11** umfasst einen Mediumkanal **14** sowie einen Gasstutzen **13**. Weiterhin weist das Adapterelement **11** einen Anschlussabschnitt **44** auf, der in komplementärerer Weise zu dem Gasstutzen **17** des Gasanschlusses **9** des Behälters **4** ausgebildet ist. Auf diese Weise ist die Sensoreinrichtung **10** an dem Gasstutzen **17** fixierbar, wobei die Sensoreinrichtung **10** gewissermaßen auf den Gasstutzen **17** aufsteckbar bzw. aufgesteckt ist. Der Gasstutzen **17** verfügt hierbei über einen Dichtungsring **34,** mittels dessen das Adapterelement **11** gegen den Gasanschluss **9** abdichtbar ist. Die Mechanik zwischen Anschlussabschnitt **44** und Gasstutzen **17** ist prinzipiell identisch zu derjenigen, mittels derer eine Schutzgasleitung an den Gasstutzen **17** anschließbar ist. Auf diese Weise ist es besonders einfach möglich, die Sensoreinrichtung **10** an den Container **1** zu fixieren, wobei die Sensoreinrichtung **10** mittels ihres Adapterelements **11** lediglich werkzeuglos sowie zerstörungsfrei lösbar auf den Gasstutzen **17** aufgesteckt wird und dort einrastet.

An einem dem Deckel **19** des Containers **1** abgewandten Ende weist das Adapterelement **11** den Gasstutzen **13** auf, der in dem gezeigten Beispiel mit einem Schnellverschluss **32** zusammenwirkt. Der Schnellverschluss **32** ist mittels eines Dichtungsrings **33** gegen den Gasstutzen **13** des Adapterelements **11** abgedichtet. Der Gasstutzen **13** ist hier in besonders vorteilhafter Weise kompatibel zu den Gasstutzen **17** des Behälters **4** ausgebildet. Insbesondere gibt der Gasstutzen **13** des Adapterelements **11** den Gasstutzen **17** des Gasanschlusses **9** zumindest im Wesentlichen, vorzugsweise vollständig, identisch wieder. Auf diese Weise ist sichergestellt, dass eine jeweilige Schutzgasleitung ohne jegliche Notwendigkeit einer Anpassung oder Veränderung anstelle an den Gasstutzen **17** des Gasanschlusses **9** unmittelbar an den Gasstutzen **13** des Adapterelements **11** angeschlossen werden kann. Auf diese Weise ist der erfindungsgemäße Container **1** ohne jegliche Umstellung weiter verwendbar, obwohl der eigentliche Gasanschluss **9** des Containers **1** nunmehr zur Fixierung der Sensoreinrichtung **10** an dem Container **1** genutzt wird. Der Gasstutzen **13** des Adapterelements **11** wirkt strömungstechnisch mit dessen Mediumkanal **14** zusammen, sodass nach Anschluss einer Schutzgasleitung an den Gasstutzen **13** (hier unter Verwendung des Schnellverschlusses **32**) das jeweilige Schutzgas unmittelbar durch den Mediumkanal **14** hindurch zu dem Gasanschluss **9** des Behälters **4** und schließlich in den Innenraum **8** des Behälters **4** strömen kann.

Das Telemetriemodul **12** der Sensoreinrichtung **10** umfasst in dem gezeigten Beispiel eine Mehrzahl von Sensoren **15** sowie einen Sender **16**. Insbesondere weist das Telemetriemodul **12** einen Geopositionssensor **41**, einen Drucksensor **24**, einen Beschleunigungssensor **25**, einen Temperatursensor **28**, einen Datenlogger **26** sowie eine Auswerteinheit **27** auf. Diese Bauteile des Telemetriemoduls **12** sind gemeinsam in einem Gehäuse **29** untergebracht, das einen Schutz besagter Bauteile vor äußeren Einwirkungen, insbesondere Feuchtigkeit und Schmutz, bereitstellt. Die Sensoren **15** sind dazu geeignet, Daten betreffend mindestens einen Zustandsparameter des Containers **1** und/oder einen Zustandsparameter des in dem Container **1** gelagerten Füllguts zu erfassen. Besagte Daten sind - ggf. nach Zwischenspeicherung in dem Datenlogger **26** sowie gegebenenfalls einer Verarbeitung mittels der Auswerteinheit **27** - mittels des Senders **16** versendbar, sodass besagte Daten aus der Ferne kabellos abgerufen werden können. Beispielsweise ist es denkbar, eine Absolutposition des Containers **1** mittels des Geopositionssensors **41** zu erfassen und mittels des Senders **16** zu versenden. Auf diese Weise ist es beispielsweise möglich, dass ein Kunde, der ein jeweiliges Füllgut erworben hat, einen Standort des Containers **1** überwachen kann und auf diese Weise abschätzen kann, zu welchem Zeitpunkt der Container **1** in seinem Betrieb zu erwarten ist. In derselben Weise ist es denkbar, eine Temperatur des Füllguts dauerhaft zu überwachen, wodurch eine Qualitätssicherung vereinfacht wird. Mittels des Datenloggers **26** sind die erfassten Daten speicherbar, sodass zudem nicht nur jeweils aktuelle Datensätze abgerufen werden können, sondern insbesondere auch eine Historie auswertbar ist. Mittels des mindestens einen Beschleunigungssensors **25** sind ferner Beschleunigungszustände des Containers **1** erfassbar, wobei bei starken Ausschlägen beispielsweise auf einen Unfall geschlossen werden kann.

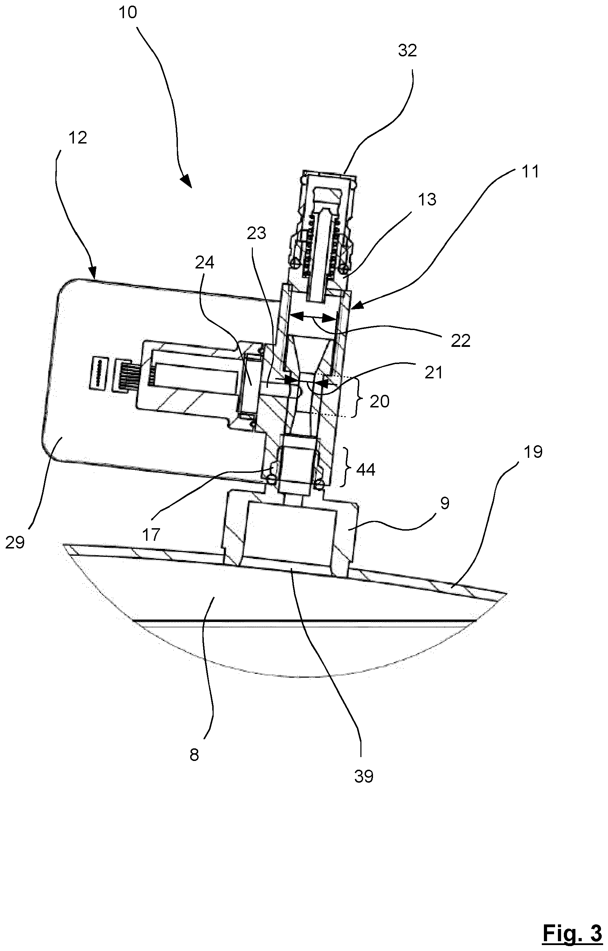

In dem gezeigten erfindungsgemäßen Ausführungsbeispiel gemäß **Figuren 1** - **3** umfasst der Mediumkanal **14** des Adapterelements **11** eine Engstelle **20**, in deren Bereich ein Querschnitt **21** des Mediumkanals **14** gegenüber einem Querschnitt **22** außerhalb der Engstelle **20** reduziert ist (vgl. Figur 3). Insbesondere ist die Engstelle **20** derart ausgebildet, dass sich der Mediumkanal **14** beidseits der Engstelle **20** erweitert. Auf diese Weise ist der Mediumkanal **14** im Bereich der Engstelle **20** in Form einer Venturi-Düse ausgebildet. Die Reduktion des Querschnitts des Mediumkanals **14** führt dazu, dass das durch den Mediumkanal **14** strömende Schutzgas im Bereich der Engstelle **20** beschleunigt wird. Demzufolge ist eine Strömungsgeschwindigkeit des Schutzgases **20** im Bereich der Engstelle **20** größer als in einem Bereich außerhalb der Engstelle **20**. Dies führt dazu, dass ein dynamischer Druck des Schutzgases im Bereich der Engstelle **20** ansteigt, wodurch umgekehrt ein statischer Druck, der hydrostatisch auf eine Wandung des Mediumkanals **14** drückt, abnimmt.

Der Mediumkanal **14** wirkt weiterhin mit einer Stichleitung **23** zusammen, deren Längsachse senkrecht zu einer Längsachse des Mediumkanals **14** ausgerichtet ist. Mit anderen Worten trifft die Stichleitung **23** unter einem Winkel **48** auf den Mediumkanal **14** im Bereich der Engstelle **20**, der hier 90° beträgt. An einem der Mediumkanal **14** abgewandten Ende wirkt die Stichleitung **23** mit dem Drucksensor **24** zusammen. Dieser ist dazu geeignet, Daten betreffend einen statischen Druck innerhalb der Stichleitung **23** zu erfassen. Gemäß obiger Erläuterung ändert sich besagter statischer Druck, sobald Schutzgas durch den Mediumkanal **14** strömt. Eine derartige Strömung ist demzufolge mittels einer Veränderung des Drucks innerhalb der Stichleitung **23** feststellbar, wobei besagte Veränderung mittels des Drucksensors **24** erfasst wird. Auf diese Weise ist es möglich, mittels der Sensoreinrichtung **10** festzustellen, sobald Schutzgas durch das Adapterelement **11** strömt. Letzteres geschieht wiederum in aller Regel nur dann, wenn Füllgut aus dem Innenraum **8** des Behälters **4** entnommen wird, wobei hierdurch bedingt ein freiwerdendes Volumen innerhalb des Behälters **4** mit zusätzlichem Schutzgas aufgefüllt wird. Demzufolge ist es beispielsweise denkbar, dass der Beginn einer Entnahme von Füllgut aus dem Behälter **4** in einer Druckverlaufskurve, die unter Verwendung von mittels des Drucksensors **24** erhobenen Daten erstellt wird, in Form eines Abfalls des Drucks erkennbar ist.

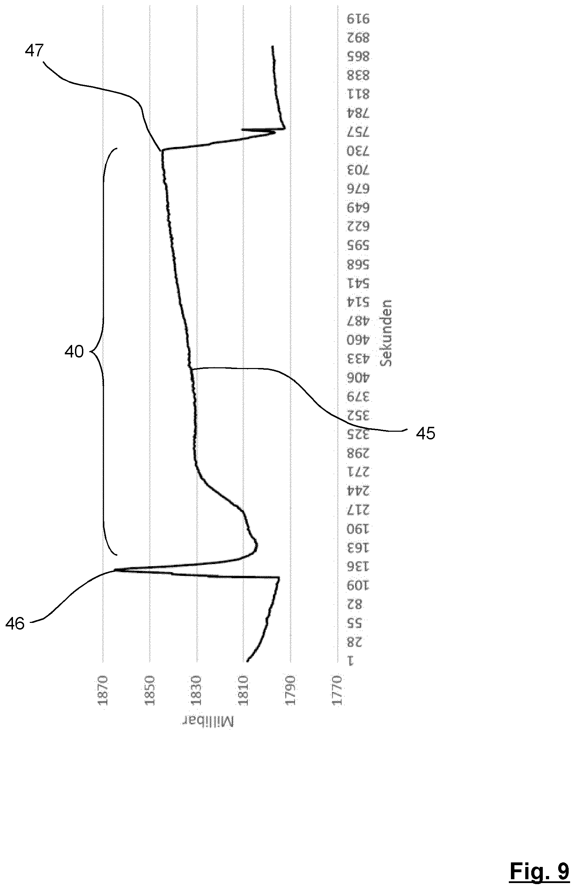

Dieses Phänomen ist beispielsweise anhand einer Druckverlaufskurve **45** erkennbar, die in **Figur 9** dargestellt ist. Hier ist insbesondere ein Peak **46** erkennbar, der zunächst einen Anschluss einer Schutzgasleitung an den Container **1** erkennen lässt, infolgedessen der statische Druck an dem Drucksensor **24** stark zunimmt. Dies ist dadurch bedingt, dass die Schutzgasleitung an eine Druckquelle angeschlossen ist, deren Druck einen Innendruck des Behälters **4** übersteigt. Mit Beginn der Entnahme des Füllguts aus dem Behälter **4** findet sodann eine gerichtete Strömung des Schutzgases durch den Mediumkanal **14** statt, woraufhin gemäß obiger Erläuterung der statische Druck an dem Drucksensor **24** schlagartig abnimmt. Der steile Abfall der Druckverlaufskurve **45** im Bereich des Peaks **46** lässt somit auf einen Beginn der Entnahme von Füllgut aus dem Behälter **4** schließen. Die Druckverlaufskurve **45** lässt weiterhin einen weiteren Hochpunkt **47** erkennen, von dem aus die Druckverlaufskurve **45** stark abfällt. Diese Stelle lässt sich interpretieren als der Zeitpunkt, zu dem der Behälter **4** vollständig geleert ist, das heißt sämtliches Füllgut aus dem Behälter **4** entnommen wurde. Eine Pumpe, mittels derer das Füllgut aus dem Behälter abgesaugt wird, zieht in diesem Moment unmittelbar das Schutzgas an, sodass der statische Druck innerhalb des Containers **1** sowie analog innerhalb des Mediumkanals **14** und der Stichleitung **23** schlagartig abnimmt. Besagter Hochpunkt **47** lässt sich demzufolge als Zeitpunkt interpretieren, zu dem der Behälter **4** vollständig geleert ist.

Die fortwährende Erfassung des Drucks mittels des Drucksensors **24** erlaubt eine Analyse des Füllstandes des Behälters **4** mit Füllgut, indem zumindest ein Zeitraum **40** erfassbar ist, innerhalb dessen eine Entnahme von Füllgut aus dem Container **1** stattfindet. In dem in **Figur 9** gezeigten Beispiel findet die Entnahme derart statt, dass der Behälter **4** des Containers **1** schließlich vollständig geleert ist. Alternativ ist es ebenso denkbar, dass die Entnahme des Füllguts zumindest vorübergehend endet, bevor der Behälter **4** vollständig geleert ist. Ein Ende der Entnahme würde in der Druckverlaufskurve **45** anhand einer schlagartigen Erhöhung des statischen Drucks erkennbar, da ohne Entnahme weiteren Füllguts aus dem Behälter **4** eine Strömung von Schutzgas durch den Mediumkanal **14** eingestellt würde und infolgedessen der dynamische Druck abnimmt, während der statische Druck zunimmt. Anhand der Druckverlaufskurve **45** lässt sich sodann schließlich feststellen, über welchen Zeitraum hinweg Füllgut aus dem Behälter **4** entnommen wurde. Hieraus lässt sich im Umkehrschluss eine Aussage darüber treffen, welcher Füllstand des Füllguts innerhalb des Behälters **4** noch vorhanden ist. Folglich ist es möglich, mittels einer Überwachung des Drucks mittels eines Drucksensors **24** der Sensoreinrichtung **10** einen Füllstand des Behälters **4** des Containers **1** zu überwachen.

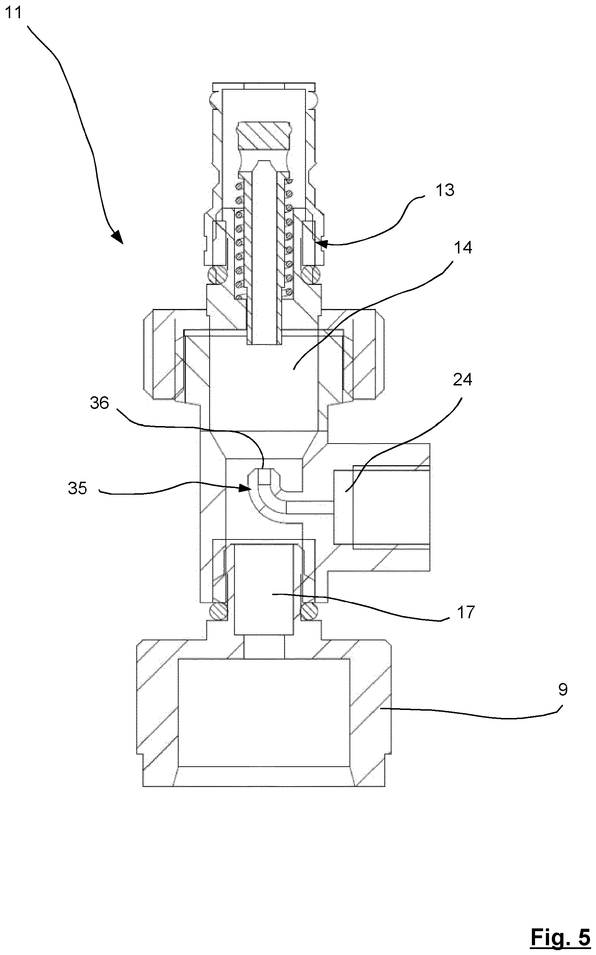

In einer alternativen Ausgestaltung des Adapterelements **11** wird eine Veränderung des Drucks innerhalb des Mediumkanals **14** nicht nach dem Venturi-Prinzip gemäß vorstehender Erläuterung erfasst, sondern mittels eines sogenannten Pitotrohrs **35.** Eine entsprechende Ausgestaltung ergibt sich anhand von **Figur 5**. Besagtes Pitotrohr **35** verfügt über einen senkrecht zu einer Strömungsrichtung des Schutzgases ausgerichteten Öffnungsquerschnitt **36**, durch den hindurch strömendes Schutzgas in das Pitotrohr **35** eintreten kann und schließlich auf einen Drucksensor **24** leitbar ist. Mittels einer solchen Anordnung ist der dynamische Druck des Schutzgases innerhalb des Mediumkanals **14** bzw. eine Veränderung desselben erfassbar, sodass auch mit einer solchen Anordnung feststellbar ist, sobald eine Strömung von Schutzgas durch den Mediumkanal **14** einsetzt. Gemäß obiger Erläuterung ist das Auftreten einer solchen Strömung mit der Entnahme von Füllgut aus dem Behälter **4** assoziierbar, sodass anhand erfasster Daten des Drucksensors **24** Beginn und Ende einer Entnahme von Füllgut aus dem Container **1** erfassbar sind, wobei mittels Feststellung eines Zeitraums, über den hinweg die Entnahme stattgefunden hat, schließlich ein Rückschluss auf den Füllstand des Füllguts innerhalb des Behälters **4** gezogen werden kann.

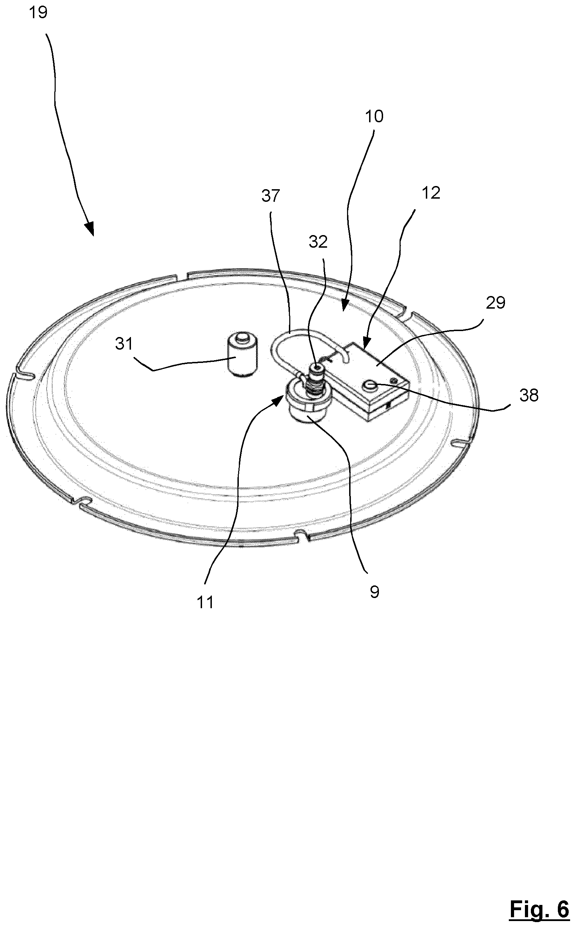

Eine alternative Ausführungsform einer Sensoreinrichtung **10,** die in den **Figuren 6 bis 8** dargestellt ist, umfasst ein Adapterelement **11,** das im Vergleich zu den Sensoreinrichtungen **10** gemäß den **Figuren 3 bis 5** deutlich kleiner ausgebildet ist. Besagte Sensoreinrichtung **10** ist mittels einer Überwurfmutter **39** an den Gasanschluss **9** des Behälters **4** angeschlossen. Der Gasanschluss **9** verfügt als solcher in dem gezeigten Beispiel über keinen eigenen Gasstutzen **17**, sodass ein Anschluss einer Schutzgasleitung an den Behälter **4** lediglich über den Gasstutzen **13** des Adapterelements **11** möglich ist. Der zugehörige Container **1** ist demzufolge derart ausgebildet, dass er auf die Anordnung der Sensoreinrichtung **10** an den Gasanschluss **9** angewiesen ist, um bestimmungsgemäß verwendet zu werden. Im Unterschied zu den vorstehend beschriebenen Sensoreinrichtungen **10** ist bei der alternativen Variante der Mediumkanal **14** zumindest im Wesentlichen horizontal orientiert, wodurch das erforderliche Bauraumvolumen des Adapterelements **11** deutlich reduziert wird. Vergleichbar zu der vorstehend beschriebenen Konstruktion verfügt auch die Sensoreinrichtung **10** gemäß der **Figuren 6 bis 8** in deren Mediumkanal **14** über eine Engstelle **20**, in der der Querschnitt **21** des Mediumkanals **14** gegenüber dessen Querschnitt **22** außerhalb der Engstelle **20** reduziert ist. Auch verfügt die Sensoreinrichtung **10** über eine Stichleitung **23**, die unter Ausbildung eines Winkels **48** im Bereich der Engstelle **20** an den Mediumkanal **14** angeschlossen ist, wobei der Winkel **48** hier von einem rechten Winkel gebildet ist. Auf diese Weise ist analog zu obiger Erläuterung eine Veränderung des statischen Drucks innerhalb des Mediumkanals **14** erfassbar, wobei die Stichleitung **23** hier in Form eines gebogenen Rohres ausgebildet ist, an dessen Ende eine flexible Verbindungsleitung **37** dicht angeschlossen ist. Besagte Verbindungsleitung **37** wirkt an einem dem Adapterelement **11** abgewandten Ende mit einem Drucksensor **24** zusammen, der hier in dem zugehörigen Telemetriemodul **12** untergebracht ist.

Letzteres verfügt hier über ein quaderförmiges Gehäuse **29**, das grundsätzlich unabhängig von dem Adapterelement **11** in Kraft übertragender Weise mit dem Deckel **19** des Containers **1** verbunden ist, insbesondere mittels einer Verschraubung. Das Telemetriemodul **12** verfügt hier über eine LED **38**, mittels derer ein Betriebszustand des Telemetriemoduls **12** bzw. der darin befindlichen Sensoren **15** optisch anzeigbar ist.

### Bezugszeichenliste

- 1: Container
- 2: Gestell
- 3: Untergrund
- 4: Behälter
- 5: Abstand
- 6: Unterseite
- 7: Öffnung
- 8: Innenraum
- 9: Gasanschluss
- 10: Sensoreinrichtung
- 11: Adapterelement
- 12: Telemetriemodul
- 13: Gasstutzen
- 14: Mediumkanal
- 15: Sensor
- 16: Sender
- 17: Gasstutzen
- 18: Oberseite
- 19: Deckel
- 20: Engstelle
- 21: Querschnitt
- 22: Querschnitt
- 23: Stichleitung
- 24: Drucksensor
- 25: Beschleunigungssensor
- 26: Datenlogger
- 27: Auswerteinheit
- 28: Temperatursensor
- 29: Gehäuse
- 30: Anschlussrohr
- 31: Überdruckventil
- 32: Schnellverschluss
- 33: Dichtungsring
- 34: Dichtungsring
- 35: Pitotrohr
- 36: Öffnungsquerschnitt
- 37: Verbindungsleitung
- 38: LED
- 39: Öffnung
- 40: Zeitraum
- 41: Geopositionssensor
- 42: Bein
- 43: tiefste Stelle
- 44: Anschlussabschnitt
- 45: Druckverlaufskurve
- 46: Peak
- 47: Hochpunkt
- 48: Winkel

## Patentansprüche

1. Container (1) zum Transport von fließfähigem Füllgut, umfassend
- mindestens ein Gestell (2) zur Aufstellung des Containers (1) auf einem Untergrund (3) sowie
- mindestens einen Behälter (4), innerhalb dessen das Füllgut aufbewahrbar ist,
wobei der Behälter (4) mittels des Gestells (2) derart in einem Abstand (5) von einem Untergrund (3) lagerbar ist, dass eine Unterseite (6) des Behälters (4) zugänglich ist,
wobei der Behälter (4) an seiner Unterseite (4) mindestens eine Öffnung (7) aufweist, mittels derer Füllgut in einen Innenraum (8) des Behälters (4) leitbar oder Füllgut aus dem Innenraum (8) entnehmbar ist,
wobei der Behälter (4) mindestens einen Gasanschluss (9) aufweist, mittels dessen eine Schutzgasleitung an den Behälter (4) anschließbar ist,
wobei mindestens eine Sensoreinrichtung (10), die ein Adapterelement (11) aufweist,
wobei die Sensoreinrichtung (10) mittels des Adapterelements (11) an den Gasanschluss (9) des Behälters (4) anschließbar ist,
wobei das Adapterelement (11) mindestens einen Gasstutzen (13) sowie mindestens einen Mediumkanal (14) aufweist,
wobei eine Schutzgasleitung an den Gasstutzen (13) anschließbar ist und ein Schutzgas durch den Gasstutzen (13) sowie durch den Mediumkanal (14) des Adapterelements (11) hindurch in den Innenraum (8) des Behälters (4) leitbar ist,
**dadurch gekennzeichnet, dass**
- die Sensoreinrichtung (10) ein Telemetriemodul (12) aufweist, wobei das Telemetriemodul (12) mindestens einen Sensor (15) sowie mindestens einen Sender (16) aufweist, wobei mittels des Sensors (15) Daten betreffend mindestens einen Zustandsparameter des Containers (1) und/oder des Füllguts erfassbar und die Daten mittels des Senders (16) kabellos versendbar sind,
- der Mediumkanal (14) mindestens eine Engstelle (20) aufweist, an der ein Querschnitt (21) des Mediumkanals (14) gegenüber einem Querschnitt (22) des Mediumkanals (14) außerhalb der Engstelle (20) reduziert ist,
- die Sensoreinrichtung (10) mindestens eine Stichleitung (23) aufweist, die strömungstechnisch mit dem Mediumkanal (14) des Adapterelements (11) zusammenwirkt, wobei die Stichleitung (23) im Bereich der Engstelle (20) an den Mediumkanal (14) angeschlossen ist und
die Stichleitung (23) an ihrem dem Mediumkanal (14) abgewandten Ende mit einem Drucksensor (24) zusammenwirkt, mittels dessen Druckschwankungen innerhalb der Stichleitung (23), die infolge einer Durchströmung des Mediumkanals (14) mit Schutzgas auftreten, erfassbar sind.

2. Container (1) zum Transport von fließfähigem Füllgut, umfassend
- mindestens ein Gestell (2) zur Aufstellung des Containers (1) auf einem Untergrund (3) sowie
- mindestens einen Behälter (4), innerhalb dessen das Füllgut aufbewahrbar ist,
wobei der Behälter (4) mittels des Gestells (2) derart in einem Abstand (5) von einem Untergrund (3) lagerbar ist, dass eine Unterseite (6) des Behälters (4) zugänglich ist,
wobei der Behälter (4) an seiner Unterseite (4) mindestens eine Öffnung (7) aufweist, mittels derer Füllgut in einen Innenraum (8) des Behälters (4) leitbar oder Füllgut aus dem Innenraum (8) entnehmbar ist,
wobei der Behälter (4) mindestens einen Gasanschluss (9) aufweist, mittels dessen eine Schutzgasleitung an den Behälter (4) anschließbar ist,
wobei mindestens eine Sensoreinrichtung (10), die ein Adapterelement (11) aufweist,
wobei die Sensoreinrichtung (10) mittels des Adapterelements (11) an den Gasanschluss (9) des Behälters (4) anschließbar ist,
wobei das Adapterelement (11) mindestens einen Gasstutzen (13) sowie mindestens einen Mediumkanal (14) aufweist,
wobei eine Schutzgasleitung an den Gasstutzen (13) anschließbar ist und ein Schutzgas durch den Gasstutzen (13) sowie durch den Mediumkanal (14) des Adapterelements (11) hindurch in den Innenraum (8) des Behälters (4) leitbar ist,
**dadurch gekennzeichnet, dass**
- die Sensoreinrichtung (10) ein Telemetriemodul (12) aufweist, wobei das Telemetriemodul (12) mindestens einen Sensor (15) sowie mindestens einen Sender (16) aufweist, wobei mittels des Sensors (15) Daten betreffend mindestens einen Zustandsparameter des Containers (1) und/oder des Füllguts erfassbar und die Daten mittels des Senders (16) kabellos versendbar sind und
innerhalb des Mediumkanals (14) ein Pitotrohr (35) mit einem Öffnungsquerschnitt (36) angeordnet ist, der Öffnungsquerschnitt (36) derart zur Strömungsrichtung des Schutzgases in dem Mediumkanal (14) ausgerichtet ist, dass ein Teil des Schutzgas in das Pitotrohr (35) eintritt, wobei das Pitotrohr den Öffnungsquerschnitt (36) fluidleitend mit einem Drucksensor (24) verbindet.

3. Container (1) nach Anspruch 1 oder 2, **dadurch gekennzeichnet, dass** die Sensoreinrichtung (10) mittels des Adapterelements (11) lösbar an den Gasanschluss (9) des Behälters (4) anschließbar ist.

4. Container (1) nach einem der Ansprüche 1 bis 3, **dadurch gekennzeichnet, dass** der Gasanschluss (9) des Behälters (4) einen Gasstutzen (17) aufweist, wobei das Adapterelement (11) formschlüssig auf den Gasstutzen (17) aufsetzbar ist

5. Container (1) nach Anspruch 4, **dadurch gekennzeichnet, dass** der an dem Adapterelement (11) ausgebildete Gasstutzen (13) den Gasstutzen (17) des Behälters (4) zumindest betreffend dessen Funktion kompatibel wiedergibt.

6. Container (1) nach Anspruch 5, **dadurch gekennzeichnet, dass**, der Gasstutzen (17) des Behälters (4) mit dem Gasstutzen (13) des Adapterelementes (11) identisch übereinstimmt.

7. Container (1) nach einem der Ansprüche 3 bis 6, **dadurch gekennzeichnet, dass** die Sensoreinrichtung (10) mit dem Gasanschluss (9) des Behälters (4) verschraubt ist.

8. Container (1) nach Anspruch 1 oder 2, **dadurch gekennzeichnet, dass** die Sensoreinrichtung (10) mittels des Adapterelements (11) stoffschlüssig mit dem Gasanschluss (9) des Behälters (4) verbunden ist.

9. Container (1) nach einem der Ansprüche 1 bis 8, **dadurch gekennzeichnet, dass** der Gasanschluss (9) an einer Oberseite (18) des Behälters (4) angeordnet ist.

10. Container (1) nach Anspruch 9, **dadurch gekennzeichnet, dass** der Gasanschluss (9) an einem Deckel (19) des Behälters (4), angeordnet ist.

11. Container (1) nach Anspruch 1, **dadurch gekennzeichnet, dass** der Mediumkanal (14) beidseits der Engstelle (20) gegenüber dem Querschnitt (21) der Engstelle (20) aufgeweitet ist.

12. Container (1) nach Anspruch 2, **dadurch gekennzeichnet, dass** der Öffnungsquerschnitt (36) senkrecht zur Strömungsrichtung des Schutzgases in dem Mediumkanal (14) ausgerichtet ist.

13. Container (1) nach einem der Ansprüche 1 bis 12, **dadurch gekennzeichnet, dass** das Telemetriemodul (12) mindestens einen Geopositionssensor (41) aufweist, mittels dessen Daten betreffend eine Absolutposition der Sensoreinrichtung (10) erfassbar sind.

14. Container (1) nach einem der Ansprüche 1 bis 13, **dadurch gekennzeichnet, dass** das Telemetriemodul (12) mindestens einen Beschleunigungssensor (25) aufweist, mittels dessen Daten betreffend Beschleunigungen der Sensoreinrichtungen (10) erfassbar sind.

15. Container (1) nach einem der Ansprüche 1 bis 14, **dadurch gekennzeichnet, dass** das Telemetriemodul (12) mindestens einen Temperatursensor (28) aufweist, mittels dessen eine Umgebungstemperatur und/oder eine Temperatur des in dem Behälter (4) befindlichen Füllguts erfassbar ist.

16. Container (1) nach einem der Ansprüche 1 bis 15, **dadurch gekennzeichnet, dass** das Telemetriemodul (12) mindestens einen Datenlogger (26) aufweist, mittels dessen erfasste Daten speicherbar sind.

17. Container (1) nach einem der Ansprüche 1 bis 16, **dadurch gekennzeichnet, dass** das Telemetriemodul (12) mindestens eine Auswerteinheit (27) aufweist, mittels derer erfasste Daten auswertbar sind.

## Claims

1. Container (1) for transporting flowable products, comprising
- at least one frame (2) for placement of the container (1) on a ground (3) as well as
- at least one container (4) inside which the product can be stored,
wherein the container (4) can be mounted by means of the frame (2) at a distance (5) from a ground (3) in such a manner that an underside (6) of the container (4) is accessible,
wherein the container (4) has at least one opening (7) on its underside (4) by means of which product can be guided into an interior (8) of the container (4) or product can be removed from the interior (8),
wherein the container (4) has at least one gas connection (9) by means of which a protective gas line can be connected to the container (4),
wherein at least one sensor device (10) which has an adapter element (11),
wherein the sensor device (10) can be connected by means of the adapter element (11) to the gas connection (9) of the container (4),
wherein the adapter element (11) has at least one gas connector (13) and at least one medium channel (14),
wherein a protective gas line can be connected to the gas connector (13) and a protective gas can be guided through the gas connector (13) and through the medium channel (14) of the adapter element (11) into the interior (8) of the container (4),
**characterized in that**
- the sensor device (10) comprises a telemetry module (12), wherein the telemetry module (12) comprises at least one sensor (15) and at least one transmitter (16), wherein data relating to at least one status parameter of the container (1) and/or the product can be detected by means of the sensor (15) and the data can be transmitted in a wireless manner by means of the transmitter (16),
- the medium channel (14) has at least one constriction (20) at which a cross-section (21) of the medium channel (14) is reduced with respect to a cross-section (22) of the medium channel (14) outside the constriction (20),
- the sensor device (10) has at least one stub (23) which cooperates fluidically with the medium channel (14) of the adapter element (11), wherein the stub (23) is connected to the medium channel (14) in the region of the constriction (20) and the stub (23) cooperates with a pressure sensor (24) at its end facing away from the medium channel (14), by means of which pressure fluctuations inside the stub (23) which occur as a result of a flow of protective gas through the medium channel (14) can be detected.

2. Container (1) for transporting flowable products, comprising
- at least one frame (2) for placement of the container (1) on a ground (3) as well as
- at least one container (4) inside which the product can be stored,
wherein the container (4) can be mounted by means of the frame (2) at a distance (5) from a ground (3) in such a manner that an underside (6) of the container (4) is accessible,
wherein the container (4) has at least one opening (7) on its underside (4) by means of which product can be guided into an interior (8) of the container (4) or product can be removed from the interior (8),
wherein the container (4) has at least one gas connection (9) by means of which a protective gas line can be connected to the container (4),
wherein at least one sensor device (10) which has an adapter element (11),
wherein the sensor device (10) can be connected by means of the adapter element (11) to the gas connection (9) of the container (4),
wherein the adapter element (11) has at least one gas connector (13) and at least one medium channel (14),
wherein a protective gas line can be connected to the gas connector (13) and a protective gas can be guided through the gas connector (13) and through the medium channel (14) of the adapter element (11) into the interior (8) of the container (4),
**characterized in that**
- the sensor device (10) comprises a telemetry module (12), wherein the telemetry module (12) comprises at least one sensor (15) and at least one transmitter (16), wherein data relating to at least one status parameter of the container (1) and/or the product can be detected by means of the sensor (15) and the data can be transmitted in a wireless manner by means of the transmitter (16),
a Pitot tube (35) having an opening cross-section (36) is arranged inside the medium channel (14), the opening cross-section (36) is arranged in such a manner to the direction of flow of the protective gas in the medium channel (14) that a portion of the protective gas enters into the Pitot tube (35), wherein the Pitot tube connects the opening cross-section (36) to the pressure sensor (24) in a fluid-conducting manner.

3. Container (1) according to Claim 1 or 2, **characterized in that** the sensor device (10) can be detachably connected by means of the adapter element (11) to the gas connection (9) of the container (4).

4. Container (1) according to one of Claims 1 to 3, **characterized in that** the gas connection (9) of the container (4) has a gas connector (17), wherein the adapter element (11) can be placed positively on the gas connector (17).

5. Container (1) according to Claim 4, **characterized in that** the gas connector (13) formed at the adapter element (11) compatibly reproduces the gas connector (17) of the container (4) at least relating to its function.

6. Container (1) according to Claim 5, **characterized in that** the gas connector (17) of the container (4) is identical to the gas connector (13) of the adapter element (11).

7. Container (1) according to one of Claims 3 to 6, **characterized in that** the sensor device (10) is screwed to the gas connection (9) of the container (4) .

8. Container (1) according to Claim 1 or 2, **characterized in that** the sensor device (10) is connected in a firmly bonded manner by means of the adapter element (11) to the gas connection (9) of the container (4).

9. Container (1) according to one of Claims 1 to 8, **characterized in that** the gas connection (9) is arranged on an upper side (18) of the container (4).

10. Container (1) according to Claim 9, **characterized in that** the gas connection (9) is arranged on a lid (19) of the container (4).

11. Container (1) according to Claim 1, **characterized in that** the medium channel (14) is widened on both sides of the constriction (20) with respect to the cross-section (21) of the constriction (20).

12. Container (1) according to Claim 2, **characterized in that** the opening cross-section (36) is aligned perpendicular to the flow direction of the protective gas in the medium channel (14).

13. Container (1) according to one of Claims 1 to 12, **characterized in that** the telemetry module (12) has at least one geoposition sensor (41) by means of which data relating to an absolute position of the sensor device (10) can be detected.

14. Container (1) according to one of Claims 1 to 13, **characterized in that** the telemetry module (12) has at least one acceleration sensor (25) by means of which data relating to accelerations of the sensor devices (10) can be detected.

15. Container (1) according to one of Claims 1 to 14, **characterized in that** the telemetry module (12) has at least one temperature sensor (28) by means of which an ambient temperature and/or a temperature of the product located in the container (4) can be detected.

16. Container (1) according to one of Claims 1 to 15, **characterized in that** the telemetry module (12) has at least one data logger (26) by means of which detected data can be stored.

17. Container (1) according to one of Claims 1 to 16, **characterized in that** the telemetry module (12) has at least one evaluation unit (27) by means of which detected data can be evaluated.

## Revendications

1. Conteneur (1) destiné à transporter un produit de remplissage fluide, comprenant
- au moins un châssis (2), destiné à poser le conteneur (1) sur un support (3), ainsi
- qu'au moins un réservoir (4), dans lequel le produit de remplissage peut être conservé,
le réservoir (4) étant susceptible d'être stocké au moyen du châssis (2) avec un écart (5) par rapport à un support (3), de telle sorte qu'une face inférieure (6) du réservoir (4) soit accessible,
le réservoir (4) comportant sur sa face inférieure (4) au moins une ouverture (7), au moyen de laquelle du produit de remplissage peut être conduit dans un espace intérieur (8) du réservoir (4) ou du produit de remplissage peut être prélevé hors de l'espace intérieur (8),
le réservoir (4) comportant au moins un raccordement de gaz (9), au moyen duquel une conduite de gaz protecteur peut se raccorder sur le réservoir (4),
au moins un système de capteur (10), qui comporte un élément adaptateur (11),
le système de capteur (10) pouvant se raccorder au moyen de l'élément adaptateur (11) sur le raccordement de gaz (9) du réservoir (4),
l'élément adaptateur (11) comportant au moins une tubulure de gaz (13), ainsi qu'au moins une canalisation de fluide (14),
une conduite de gaz protecteur pouvant se raccorder sur la tubulure de gaz (13) et un gaz protecteur pouvant être conduit à travers la tubulure de gaz (13), ainsi qu'à travers la canalisation de fluide (14) de l'élément adaptateur (11) dans l'espace intérieur (8) du réservoir (4),
**caractérisé en ce que**
- le système de capteur (10) comporte un module télémétrique (12), le module télémétrique (12) comportant au moins un capteur (15), ainsi qu'au moins un émetteur (16), au moyen du capteur (15), des données concernant au moins un paramètre d'état du conteneur (1) et / ou du produit de remplissage pouvant être détecté et les données pouvant être envoyées sans fil au moyen de l'émetteur (16),
- la canalisation de fluide (14) comporte au moins un rétrécissement (20), sur lequel une section transversale (21) de la canalisation de fluide (14) est réduite par rapport à une section transversale (22) de la canalisation de fluide (14) extérieure au rétrécissement (20),
- le système de capteur (10) comporte au moins une conduite de dérivation (23) qui coopère de manière fluidique avec la canalisation de fluide (14) de l'élément adaptateur (11), la conduite de dérivation (23) étant raccordée sur la canalisation de fluide (14) dans la région du rétrécissement (20), et
sur son extrémité opposée à la canalisation de fluide (14), la conduite de dérivation (23) coopérant avec un capteur de pression (24), au moyen duquel des fluctuations de pression à l'intérieur de la conduite de dérivation (23), qui se produisent suite à une irrigation de la canalisation de fluide (14) par du gaz protecteur peuvent être détectées.

2. Conteneur (1) destiné à transporter un produit de remplissage fluide, comprenant
- au moins un châssis (2), destiné à poser le conteneur (1) sur un support (3), ainsi
- qu'au moins un réservoir (4), dans lequel le produit de remplissage peut être conservé,
le réservoir (4) étant susceptible d'être stocké au moyen du châssis (2) avec un écart (5) par rapport à un support (3), de telle sorte qu'une face inférieure (6) du réservoir (4) soit accessible,
le réservoir (4) comportant sur sa face inférieure (4) au moins une ouverture (7), au moyen de laquelle du produit de remplissage peut être conduit dans un espace intérieur (8) du réservoir (4) ou du produit de remplissage peut être prélevé hors de l'espace intérieur (8),
le réservoir (4) comportant au moins un raccordement de gaz (9), au moyen duquel une conduite de gaz protecteur peut se raccorder sur le réservoir (4),
au moins un système de capteur (10), qui comporte un élément adaptateur (11),
le système de capteur (10) pouvant se raccorder au moyen de l'élément adaptateur (11) sur le raccordement de gaz (9) du réservoir (4),
l'élément adaptateur (11) comportant au moins une tubulure de gaz (13), ainsi qu'au moins une canalisation de fluide (14),
une conduite de gaz protecteur pouvant se raccorder sur la tubulure de gaz (13) et un gaz protecteur pouvant être conduit à travers la tubulure de gaz (13), ainsi qu'à travers la canalisation de fluide (14) de l'élément adaptateur (11) dans l'espace intérieur (8) du réservoir (4),
**caractérisé en ce que**
- le système de capteur (10) comporte un module télémétrique (12), le module télémétrique (12) comportant au moins un capteur (15), ainsi qu'au moins un émetteur (16), au moyen du capteur (15), des données concernant au moins un paramètre d'état du conteneur (1) et / ou du produit de remplissage pouvant être détectées et les données pouvant être envoyées sans fil au moyen de l'émetteur (16),
- à l'intérieur de la canalisation de fluide (14) étant placé un tube de Pitot (35) avec une section transversale d'ouverture (36), la section transversale d'ouverture (36) étant orientée vers la direction d'écoulement du gaz protecteur dans la canalisation de fluide (14), de telle sorte qu'une partie du gaz protecteur pénètre dans le tube de Pitot (35), le tube de Pitot reliant de manière fluidique la section transversale d'ouverture (36) avec un capteur de pression (24) .

3. Conteneur (1) selon la revendication 1 ou 2, **caractérisé en ce que** le système de capteur (10) peut se fixer de manière amovible sur le raccordement de gaz (9) du réservoir (4) au moyen de l'élément adaptateur (11).

4. Conteneur (1) selon l'une quelconque des revendications 1 à 3, **caractérisé en ce que** le raccordement de gaz (9) du réservoir (4) comporte une tubulure de gaz (17), l'élément adaptateur (11) pouvant se poser par complémentarité de forme sur la tubulure de gaz (17).

5. Conteneur (1) selon la revendication 4, **caractérisé en ce que** la tubulure de gaz (13) conçue sur l'élément adaptateur (11) reproduit de manière compatible la tubulure de gaz (17) du réservoir (4) au moins en ce qui concerne sa fonction.

6. Conteneur (1) selon la revendication 5, **caractérisé en ce que** la tubulure de gaz (17) du réservoir (4) coïncide à l'identique avec la tubulure de gaz (13) de l'élément adaptateur (11).

7. Conteneur (1) selon l'une quelconque des revendications 3 à 6, **caractérisé en ce que** le système de capteur (10) est vissé avec le raccordement de gaz (9) du réservoir (4).

8. Conteneur (1) selon la revendication 1 ou 2, **caractérisé en ce que** le système de capteur (10) est relié par conjugaison de matière avec le raccordement de gaz (9) du réservoir (4) au moyen de l'élément adaptateur (11).

9. Conteneur (1) selon l'une quelconque des revendications 1 à 8, **caractérisé en ce que** le raccordement de gaz (9) est placé sur une face supérieure (18) du réservoir (4).

10. Conteneur (1) selon la revendication 9, **caractérisé en ce que** le raccordement de gaz (9) est placé sur un couvercle (19) du réservoir (4).

11. Conteneur (1) selon la revendication 1, **caractérisé en ce que** la canalisation de fluide (14) est élargie de part et d'autre du rétrécissement (20) par rapport à la section transversale (21) du rétrécissement (20).

12. Conteneur (1) selon la revendication 2, **caractérisé en ce que** la section transversale d'ouverture (36) est orientée à la perpendiculaire de la direction d'écoulement du gaz protecteur dans la canalisation de fluide (14).

13. Conteneur (1) selon l'une quelconque des revendications 1 à 12, **caractérisé en ce que** le module télémétrique (12) comporte au moins un capteur de géolocalisation (41), au moyen duquel des données concernant une position absolue du système de capteur (10) peuvent être détectées.

14. Conteneur (1) selon l'une quelconque des revendications 1 à 13, **caractérisé en ce que** le module télémétrique (12) comporte au moins un capteur d'accélération (25), au moyen duquel des données concernant des accélérations des systèmes de capteurs (10) peuvent être détectées.

15. Conteneur (1) selon l'une quelconque des revendications 1 à 14, **caractérisé en ce que** le module télémétrique (12) comporte au moins un capteur de température (28), au moyen duquel une température ambiante et / ou une température du produit de remplissage se trouvant dans le réservoir (4) peut être détectée.

16. Conteneur (1) selon l'une quelconque des revendications 1 à 15, **caractérisé en ce que** le module télémétrique (12) comporte au moins un enregistreur de données (26), au moyen duquel des données détectées peuvent être mémorisées.

17. Conteneur (1) selon l'une quelconque des revendications 1 à 16, **caractérisé en ce que** le module télémétrique (12) comporte au moins une unité d'évaluation (27), au moyen duquel des données détectées peuvent être évaluées.
